Europäisches Patentamt

(19) European Patent Office

Office européen des brevets

(11) Publication number: **0 039 987**
**A2**

(12) # EUROPEAN PATENT APPLICATION

(21) Application number: **81301183.0**

(22) Date of filing: **19.03.81**

(51) Int. Cl.³: **F 16 H 3/04**

(30) Priority: **12.05.80 PC T/US80/00550**

(43) Date of publication of application:
**18.11.81 Bulletin 81/46**

(84) Designated Contracting States:
**DE FR GB IT**

(71) Applicant: **CATERPILLAR TRACTOR CO.**
**100 Northeast Adams Street**
**Peoria Illinois 61629(US)**

(72) Inventor: **Chambers, Robert O.**
**926, Main Street, Apt. 1009 Glen Oak Towers**
**Peoria Illinois 61602(US)**

(72) Inventor: **Ogden, Marion E.**
**401, S. Mississippi**
**Morton Illinois 61550(US)**

(74) Representative: **Brunner, Michael John et al,**
**Gill Jennings & Every 53 to 64, Chancery Lane**
**London WC2A 1HN(GB)**

(54) Drive mechanism for a torque converter.

(57) A drive apparatus (10) includes a drive member (11) and a connected driving ring gear (23) rotatable about a first axis (21) for supplying power to a torque converter (13). A compact speed change mechanism (16) interconnects the driving ring gear (23) and torque converter (13) and includes a driven ring gear (25) connected to the torque converter, and a support device (17,20,32,50). The support device (17,20,32,50) rotatably supports the driven ring gear (25) on a second axis (27) offset from the first axis (21), and the meshed ring gears (23,25) have a preselected tooth differential to effect a speed change therebetween. The support device includes a support member (17) having a portion (18) journalled in the drive member (11), and an arm (50) on the support member is rotationally fixed while it is allowed to have a preselected amount of play movement.

EP 0 039 987 A2

./...

FIG.1.

- 1 -

CATERPILLAR TRACTOR CO.          GJE 5181/012

DRIVE MECHANISM FOR A TORQUE CONVERTER

This invention relates generally to gearing, and more particularly to a compact drive mechanism for effecting a speed change of the input drive to a torque converter.

In many vehicle power trains the output end of the engine is closely coupled to the input end of a transmission. Since a hydrodynamic torque converter is located at the front end of many power shaft transmissions, this places the engine flywheel or other engine output member in closely disposed proximity to the input member of the torque converter.

Furthermore, it can be appreciated that it is sometimes difficult to correctly match the output speed and performance of a particular engine with the operating characteristics of one torque converter or a relatively limited number of different sized torque converters. Rather than increasing the size of the torque converter in order to better match a given engine, which can be a relatively costly solution, it has been found desirable to increase the speed of the input member that drives that torque converter. Such a change in the input speed can be accomplished by utilizing a conventional transfer gear system between the driving engine and the driven torque converter, but this can be an excessively costly solution.

A further problem arises in many power trains

- 2 -

wherein the amount of available space is limited for providing either a transfer gear system of conventional construction or an increased size torque converter. This is especially true for vehicle drive power trains where space is at a premium.

Therefore, what is needed is a compact and economical mechanism for speeding up or slowing down the input drive to a toreque converter from a driving power source of preselected physical characteristics. For example, speeding up the input member of a torque converter by only about 10 to 15% can obviate the need for a torque converter of greater capacity or can result in a much improved vehicle operating efficiency.

In accordance with one aspect of the present invention a drive mechanism has a driving ring gear rotatable about a first axis, a driven torque converter, and a speed change mechanism having a driven ring gear connected to the torque converter, and support means for rotatably supporting the driven ring gear on a second axis offset from the first axis, and with the ring gears being in meshed engagement and having a preselected tooth differential for effecting a speed change therebetween.

Thus an improved drive mechanism is provided with a speed change mechanism for increasing the input speed to a torque converter without utilizing a complex transfer gear arrangement at the input thereof. The speed change mechanism is desirably arranged to occupy a minimum volume. While a speed-up geared input mechanism is disclosed, the present invention is also applicable to reducing the input speed to a torque converter member.

The invention includes a drive apparatus having a driving member

rotatable about a first axis, a torque converter having a rotatable input member, and a speed change mechanism. The speed change mechanism includes a support member having first and second portions, a driving ring gear rotatable coaxially with the driving member, and wherein the first portion of the support member is journalled in the driving member on the first axis. Retaining means are provided for preventing rotation of the support member, and a bearing assembly on the second portion of the support member defines a second axis spaced parallel to the first axis. A driven ring gear is rotatably carried by the bearing assembly and is meshed with the driving ring gear, and the driven gear is drivingly connected to the converter input member.

In the illustrated embodiment, the retaining means permits a small amount of play of the support member relative to the housing. The retaining means includes a fixed support and a link pivotally connected to an arm portion of the support member, and pivotally connected to the fixed support.

In the illustrated embodiment, the driving ring gear is mounted on a flywheel connected to an engine crankshaft, and the driven ring gear is smaller than the driving ring gear and defines therewith a crescent-shaped clearance space therebetween. The retaining means can comprise an arm formed integrally with the support member and extending radially therefrom and axially through the crescent-shaped clearance space between the ring gears. A link can be pivotally connected to the arm and to a fixed support for preventing rotation of the support member.

The drive apparatus of the present invention is simple and economical in construction while yet providing a highly improved speed increaser or speed reducer for driving a torque converter in a structure requiring a minimal increase in the size thereof.

- 4 -

One example of a mechanism according to the invention will now be described with reference to the accompanying drawings, in which:-

Figure 1 is a fragmentary, diagrammatic, diametrically sectioned, elevational view of the drive apparatus; and,

Figure 2 is a fragmentary, diagrammatic, transverse sectional view taken substantially along line II-II of Figure 1.

In the illustrated example a drive apparatus generally designated 10 is provided for connecting an independently rotatably supported engine crankshaft 11 to the input member 12 of a hydrodynamic torque converter 13. The torque converter can be of conventional construction having the usual impeller input element, reaction element, and turbine output element therein (not shown). For example, US A 3,002,593, US A 3,240,308 show torque converter constructions of the type generally referred to. The drive apparatus 10 is enclosed in an outer housing 14.

The invention includes a speed change mechanism generally designated 16 for effecting a speed change between the crankshaft and the input drive 12 to the torque converter 13. The illustrated mechanism advantageously increases the input drive speed to the torque converter and avoids the need for a more complex transfer gear system or for a torque converter of larger size. More specifically, the speed change mechanism 16 including a support device or member 17 defining a first cylindrical portion 18

- 5 -

and a second cylindrical portion 19. The first portion 18 is journaled or supported in a bearing assembly 20 carried by the crankshaft 11 or associated flywheel 22 connected thereto. Thus, the first portion of the support member is positioned coaxially of a first axis 21 defining the axis of rotation of the crankshaft. The engine crankshaft is supported in a conventional manner by bearings, not shown, and has the usual degree of radial motion.

Preferably, an internally toothed, first ring gear 23 is releasably secured to the flywheel 22 by a plurality of bolts 24. A complementary externally toothed, second ring gear 25 is in localized meshing engagement with the ring gear 23 and is releasably secured to the input member 12 of the torque converter 13 by a plurality of bolts 26. Advantageously, the second ring gear 25 and the input member 12 are supported on the second portion 19 of the support member 17 for rotation about a second axis 27 disposed in preselected offset, but parallel relation to the first axis 21.

A tubular drive support member 28 is releasably secured to the input member 12 by bolts 29. A double tapered, second bearing assembly 32 is coaxially mounted on the second portion 19 of the support member 17 for rotatably supporting the tubular drive support member 28 and thus the input member 12 of the torque converter on the second axis 27.

More particularly, the second bearing assembly 32 includes an opposed pair of tapered roller bearing sets 33 and 34 having first and second outer races 35 and 36, first and second inner races 37 and 38, and first and second pluralities of tapered roller elements 39 and 40. The outer races 35, 36 are axially retained securely in position by a retaining flange 43 on the tubular drive support member 28, and the inner races 37, 38 are axially retained securely between an annular shoulder 44 on the second portion 19 of the support member 17 and an end cap 45 releasably secured thereto.

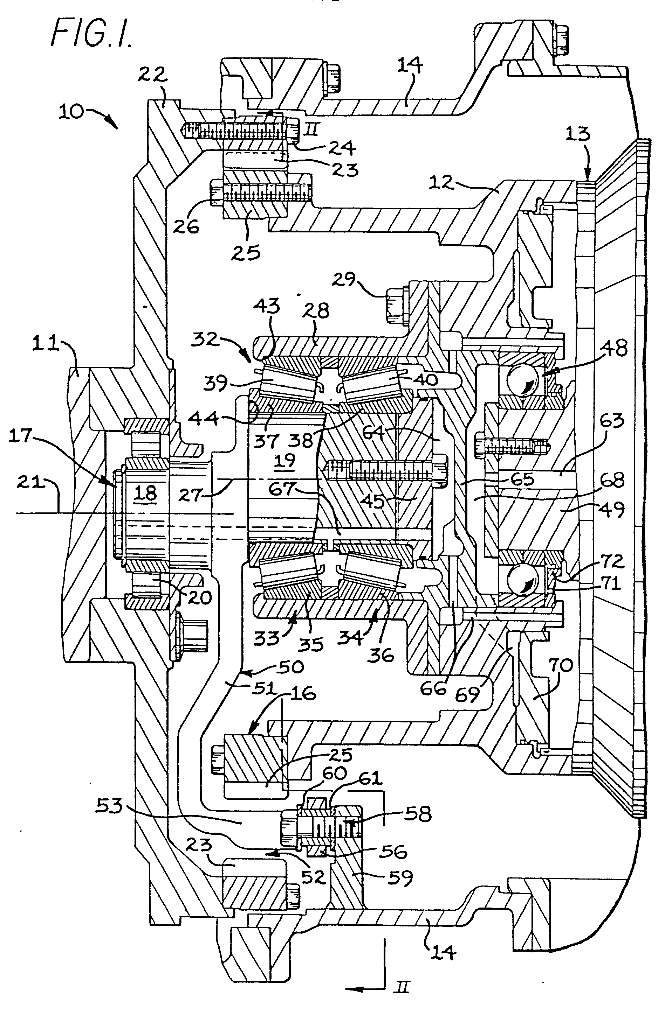

As further shown in Fig. 1, a third bearing assembly 48 is provided within the input member 12 to rotatively support another member 49 of the torque converter 13 on the axis 27, such as the turbine output shaft thereof.

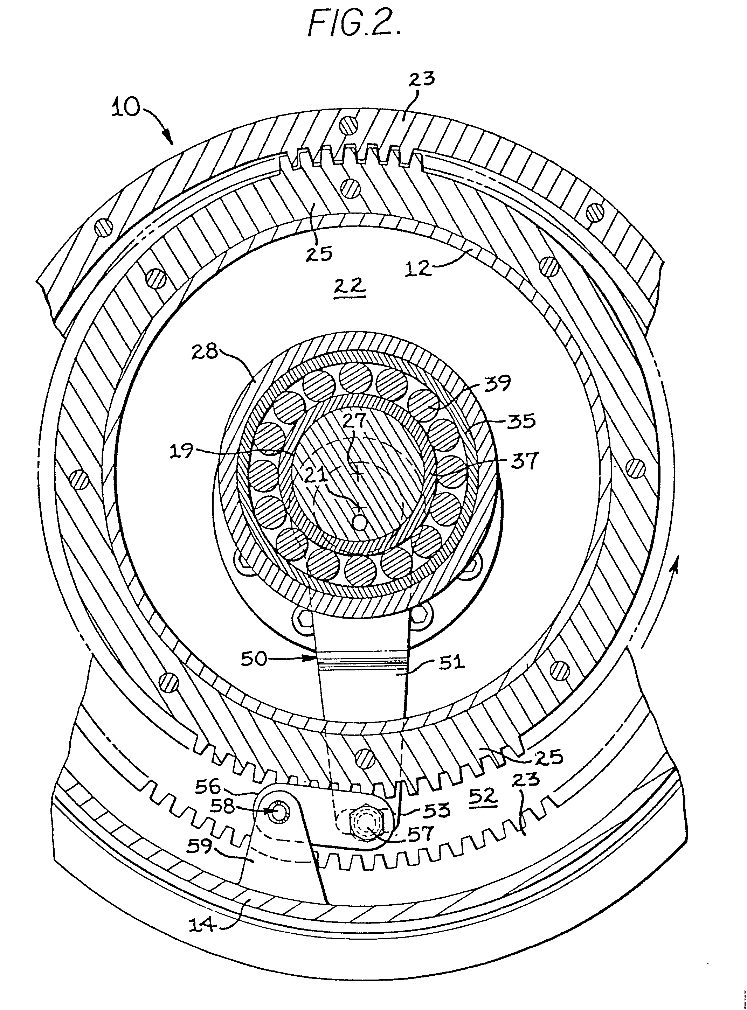

Support member 17 is effectively retained against rotation with the crankshaft 11 and the flywheel 22 by retaining means 50 including an arm 51 extending radially from the support member intermediate portions 18 and 19. As shown best in Fig. 2, the diameter of the inner ring gear 25 is slightly smaller than the diameter of outer ring gear 23 so as to define a crescent-shaped clearance space 52 therebetween. Arm 51 includes an axially extending distal end portion 53 extending through the clearance space.

A link 56 is pivotally connected to the distal end portion 53 of the arm 51 by a pivot pin 57 as shown in Fig. 2. The opposite end of the link is pivotally anchored to a coupling assembly generally designated 58 as best shown in Fig. 1. The coupling assembly 58 is connected to the housing 14 via an upstanding support post 59, and it is to be noted that the link 56 has a preselected amount of axial movement on the coupling assembly 58 between first and second shoulders 60,61 thereof. Thus, as shown, the retaining means 50 effectively prevents rotation of the support member 17 while allowing limited axial and radial play movement thereof relative to the housing 14.

A first lubrication distribution chamber 64 is defined between the end cap 45 and a recessed dividing wall member 65 connected to the input member 12. Lubricating fluid enters the chamber via passages 66 and exits therefrom via passages 67 to lubricate the first and second bearing assemblies 20,32. The dividing wall member defines with the turbine output shaft 49 a second fluid distribution chamber 68 for subsequent fluid routing to a lock-up clutch actuation chamber 69. When chamber 69 is fully pressured via a fluid distribution passage 63 and the chamber 68, an annular actuating piston 70 will move to the right when viewing the drawing to connect the input member 12 directly to the turbine output shaft 49 through a conventional clutch pack, not shown, and to effectively by-pass normal fluid operation of the torque converter 13 in a well known manner. In order to assure lubrication of the third bearing assembly 48 when the lock-up clutch actuation chamber is not pressurized, a plurality of lubrication ports 71 are provided in an annular sealing ring 72 to permit fluid to pass to the left when viewing Fig. 1 from a continuously pressurized separate source, not shown.

The driving input ring gear 23 meshes generally at one peripheral location with the driven ring gear 25 so as to provide the desired speed increase to the torque converter input member 12. Thus, the drive apparatus 10 is advantageously adapted for use in drive systems, such as in vehicle drive systems, wherein increased rpm is desired to drive a torque converter at a higher rate of speed without the use of a more complex conventional transfer gear arrangement and without increasing the size of the torque converter.

Advantageously, the complementary ring gears 23 and 25 have different diameters and a preselected difference in the number of teeth thereof to obtain a specific increase in speed, for example a speed increase of about 10 to 15% above engine speed. By manipulating the number of teeth in these two gears and the preselected distance between the axes 21 and 27, as determined by the constructions of the cylindrical portions 18,19 of the support member 17, a large range of speed changes can be conveniently effected.

As the housing 14 is maintained relatively small, the cost of the drive apparatus is effectively minimized while, at the same time, permitting its size to be maintained compact for facilitated vehicle installation.

We also contemplate that the drive apparatus 10 can be used for speed reduction purposes. This is conveniently achieved by converting the driving input outer ring gear 23 and the driven inner ring gear 25 to a driving input inner ring gear and a driven outer ring gear respectively at the same general location and with the same general offset axis bearing support system as discussed above.

- 9 -

## CLAIMS

1. A drive mechanism (10) having a driving ring gear (23) rotatable about a first axis (21); a torque converter (13); and a speed change mechanism (16) comprising a driven ring gear (25) connected to the torque converter (13), and support means (17, 20, 32, 50) for rotatably supporting the driven ring gear (25) on a second axis (27) offset from the first axis (21), the ring gears (23, 25) being in meshed engagement and having a preselected tooth differential to effect a speed change therebetween.

2. A mechanism (10) according to claim 1, wherein the support means (17, 20, 32, 50) is located radially within the driven ring gear (25).

3. A mechanism (10) according to claim 1 or claim 2, wherein the torque converter (13) has an input member (12) connected to the driven ring gear (25), and wherein the support means (17, 20, 32, 50) includes a support member (17) and a bearing assembly (32) connected generally between the support member (17) and the input member (12).

4. A mechanism (10) according to claim 1 wherein the driving ring gear (23) is an internal ring gear, and the driven ring gear (25) is an external ring gear, whereby the gears (23, 25) define a crescent-shaped clearance space (52) therebetween.

5.     A mechanism (10) according to claim 4, wherein the support means (17, 20, 32, 50) includes retaining means (50) extending through the clearance space (52) for preventing rotation of the support means (17, 20, 32, 50).

6.     A mechanism (10) according to any of claims 1 to 5, including an engine crankshaft (11) connected to the driving ring gear (23), and wherein the support means (17, 20, 32, 50) includes a support member (17) having first and second cylindrical portions (18, 19) and a bearing assembly (20) is provided to journal the first cylindrical portion (18) generally in the crankshaft (11).

7.     A mechanism (10) according to claim 6, wherein the support means (17, 20, 32, 50) includes retaining means (50, 59) for preventing rotation of the support member (17).

8.     A mechanism (10) according to claim 7 wherein the torque converter (13) has an input member (12) connected to the driven ring gear (25), and the support means (17, 20, 32, 50) includes another bearing assembly (32) on the second cylindrical portion (19) for rotatably supporting the input member (12).

9.     A mechanism (10) according to claim 8, wherein the other bearing assembly (22) includes an opposed pair of tapered roller bearing sets (33, 34).

10.    A mechanism (10) according to any of claims 1 to 9, including a stationary member (14) and wherein the support means (17, 20, 32, 50) includes a support member (17) having an arm (51), the arm (51) extending between the ring gears (23, 25) and being connected to the stationary member (14).

11.    A drive mechanism (10) having a drive member (11) rotatable about a first axis (21), a torque converter (13) having a rotatable input member (12), and a speed change mechanism (16) comprising a drive ring gear (23) connected to the drive member (11); a support member (17) having first (18) and second (19) portions, the first portion (18) being journalled to the drive member (11) coaxially of the first axis (21); retaining means (50,56) for preventing rotation of the support member (17) about the first axis (21); a bearing assembly (32) on the second portion (19) of the support member (17) defining a second axis (27) spaced parallel to the first axis (21); and a driven ring gear (25) carried rotatably by the bearing assembly (32) and meshed with the driving ring gear (23), the driven ring gear (25) being drivingly connected to the converter input member (12).

12.  A mechanism (10) according to claim 11, including a housing (14), and wherein the retaining means (50, 56) includes coupling means (56, 58) permitting a small amount of play-displacement of the support member (17) relative to the housing (14).

13.  A mechanism (10) according to claim 12, including a fixed support (59), and wherein the coupling means (56, 58) includes a link (56) pivotally connected at one end to the support member (17) and at the opposite end to the fixed support (59).

14.  A mechanism (10) according to claim 11, including a fixed support (59), and wherein the support member (17) includes an arm (51) extending radially of the first axis (21), and the retaining means (50, 56) includes a link (56) pivotally connected to one end to the arm (51) and at the opposite end to the fixed support (59).

15.  A mechanism (10) according to any of claims 11 to 14, wherein the driving ring gear (23) is an internal ring gear and the driven ring gear (25) is an external ring gear.

16.  A mechanism (10) according to any of claims 11 to 14, wherein one of the ring gears (23, 25) has a diameter less than that of the other ring gear to define a crescent-shaped clearance space (52) therebetween.

**0039987**

- 12 -

17.  A mechanism (10) according to any of claims 11 to 16, wherein the bearing assembly (32) includes an opposed pair of tapered bearing sets (33, 34).

18.  A drive mechanism (10) according to any of claims 11 to 17 including a second bearing assembly (20) journalling the first portion (18) of the support member (17) to the drive member (11).

19.  A mechanism (10) according to any of claims 11 to 18 including another torque converter member (49) and a third bearing assembly (48) mounted coaxially of the second axis (27) and rotatably carrying the other torque converter member (49).

20.  A mechanism (10) according to any of claims 11 to 19 wherein the first and second portions (18, 19) of the support member (17) are axially offset cylindrical portions.

21.  A mechanism (10) according to any of claims 11 to 20 wherein the support member (17) includes a radially extending element (51) and an axially extending distal end portion (53), the retaining means (50, 56) including means (56, 58) for retaining the distal end portion (53) while permitting a small amount of play movement thereof.

FIG.1.

0039987

# FIG.2.